# EUROPEAN PATENT SPECIFICATION

(11) **EP 3 534 068 B1**
(45) Date of publication and mention of the grant of the patent: **04.11.2020**
(21) Application number: 17896996.0
(22) Date of filing: 13.06.2017
(51) Int. Cl.: F23C 10/08, B04C 5/085, F23J 15/02, F23C 10/10, B04C 5/13

(54) **CYCLONE SEPARATOR HAVING CENTRAL CYLINDER MADE OF NON-METALLIC REFRACTORY MATERIAL**
ZYKLONABSCHEIDER MIT ZENTRALEM, AUS NICHTMETALLISCHEM FEUERFESTEM MATERIAL HERGESTELLTEM ZYLINDER
SÉPARATEUR CYCLONE DOTÉ DE CYLINDRE CENTRAL EN MATÉRIAU RÉFRACTAIRE NON MÉTALLIQUE

(30) Priority: 20.02.2017 CN 201710089043
(43) Date of publication of application: 04.09.2019
(73) Proprietor: Jiangsu Huawei Machinery Manufacturing Co., Ltd, Jiangsu 224700 (CN)
(72) Inventor: ZHANG, Lianhua, Yancheng Jiangsu 224700 (CN); CHEN, Baijin, Yancheng Jiangsu 224700 (CN); WANG, Ji, Yancheng Jiangsu 224700 (CN); ZHANG, Hui, Yanchen Jiangsu 224700 (CN); QIU, Yunlong, Yanchen Jiangsu 224700 (CN)
(74) Representative: Sun, Yiming
(86) International application number: PCT/CN2017/088077
(87) International publication number: WO 2018/149062

(56) References cited:
- WO-A1-84/04471
- WO-A1-2016/016087
- CN-A- 106 642 088
- CN-U- 203 836 945
- CN-U- 204 816 931
- CN-U- 206 478 632
- CN-Y- 2 416 376
- DE-A1- 3 705 793
- US-A- 3 273 320

## Description

### TECHNICAL FIELD

The present invention relates to the technical field of circulating fluidized bed apparatuses, and more specifically to a cyclone separator with a central cylinder made of non-metal refractory material.

### BACKGROUND

A cyclone separator is one of key components in a coal gas circulating fluidized bed gasification system. It mainly functions to separate a large amount of high temperature solid materials from a gas stream and send the materials back to a furnace chamber, so as to ensure multiple burning reaction cycles of a fuel and a desulfurizing agent. A central cylinder is a key component of the cyclone separator. It runs in an environment intensely scoured by a high temperature dust-containing flue gas of more than 900 °C. A central cylinder within a traditional cyclone separator is generally a cylindrical structure made of a metal.

US 3 273 320 A discloses a cyclone separator, particularly adapted for use in operations above 1093 °C (2000 °F), which comprises the features specified in the preamble of claim 1, and which includes an enclosing metal wall with a tangential entry for solids-laden gases, separate outlets for gases and solids, refractory walls contiguous to and lining the metal wall, refractory linings for the said entry and outlets, a support shelf circumferentially mounted within and projecting inwardly from the side walls, a separate refractory cyclone tube located within the confines of the enclosing walls, said tube being provided with a plurality of longitudinal slits extending through the refractory wall, downwardly from the top and terminating short of the bottom of the tube, said tube having an outwardly projecting upper flange portion which provides a lip, the lower side of which impinges upon said shelf to position and space the tube away from the walls and within a space separating the entry and outlets, a refractory hold-down ring resting upon the *top* of the flange and located between the cyclone tube and the refractory lined metal wall enclosing the top of said cyclone separator bv virtue of which arrangement excessive movement and vibrations of the cyclone tube by impingement thereupon of solids and gases is prevented.

WO 84/04471 discloses a cyclone for the cleaning of hot gases, in which the centre-pipe is produced of curved outer and inner elements which are made of fireproof material. The outer and inner elements are suspended in a self-supporting construction in upper end elements, and the lower edge of the centre-pipe is provided with lower end elements, in that the individual elements are suspended within each other by means of projections, and the upper end elements are suspended in a supporting structure by means of anchoring devices which cooperate with grooves in the upper end elements. There is hereby achieved a centre-pipe which is capable of withstanding high temperatures, and which can therefore be used in cyclones for the cleaning of hot gases.

DE 37 05 793 A1 discloses a filter apparatus for gas purification comprising the combination of a dust filter, which is insensitive to heat and flying sparks, with a catalyst element in one module. The dust filter element used can be an open-pored expanded ceramic, which at the same time can have a catalytic coating. Dust filters which can also be used are filters, which are resistant to heat and flying sparks, having ceramic nonwoven fibre webs, nonwoven steel wire webs or packed bed filters or suitable centrifugal separators, e.g. a separation nozzle, which are arranged as a module with a catalyst in the form of a coated expanded ceramic.

CN 2 416 376 Y discloses a double-cyclone straight tube type desulfuring dust remover. A water spraying vertical pipe group is vertically arranged in a barrel-shaped housing of which the upper and the lower ends are provided with tapered seals, and the upper and the lower ends of the vertical pipe group are respectively communicated with an upper and a lower annular pipes; the upper annular pipe is communicated with a water inlet pipe. The lower end of the housing is communicated with a water return pipe, and the central position of the upper tapered seal is provided with a smoke gas inlet pipe of which the lower port is arranged at the lower end of a housing inner cavity; the lower end of the smoke gas inlet pipe is connected with the housing by a supporting column connecting ring and a fixed mount, and the lower side of the supporting column connecting ring is connected with a smoke gas separator.

The central cylinder has a short service life due to its poor capability to resist thermal deformation and scouring, requiring a replacement generally about once two years. Otherwise, the deformed central cylinder not only affects separation efficiency of the cyclone separator, but also increases wearing of a rear flue and the burden of a subsequent dust remover. In addition, replacing the central cylinder requires a shut-down, and the replacing process involves complex disassembly and assembly and consumes a large amount of labor and time, which increases a cost of maintenance and use. Moreover, a metal central cylinder has a high cost of manufacturing in itself. Therefore, traditional cyclone separators suffer from obvious technical shortcomings such as a heavy investment, a high cost of manufacturing, a high cost of maintenance and a short service life.

### SUMMARY

An object of the present invention is to provide a cyclone separator with a central cylinder made of non-metal refractory material that is highly capable of resisting thermal deformation and scouring.

According to one aspect of the present invention, a cyclone separator with a central cylinder made of non-metal refractory material is provided, which includes a housing and a central cylinder located within a separation chamber of the housing. An inlet is provided on a side wall of the housing, and an outlet being provided on the top of the housing. The central cylinder separates the separation chamber into an outer separation chamber and an inner separation chamber. The inside of the central cylinder is the inner separation chamber, and the outside of the central cylinder is the outer separation chamber. The outer separation chamber is in communication with the inlet, and the inner separation chamber is in communication with the outlet.

The central cylinder is made of non-metal refractory material, such that the central cylinder is not deformed in a high temperature environment and is resistant to wearing.

A support beam is radially provided on the side wall of the housing, the support beam is a hollowed-out upwardly arched structure, and an arch surface of the support beam is connected to a lower end of the central cylinder for supporting the central cylinder.

An upper end of the central cylinder and the top of the housing are connected by continuous pouring or masonry, a lower end of the central cylinder and the support beam are connected by continuous pouring or masonry, and the side wall of the housing and the support beam are connected by continuous pouring or masonry.

In some implementations, a slag trap is provided at the bottom of the separation chamber, and the separation chamber of the housing is in communication with the slag trap.

In some implementations, the housing comprises a first cylindrical section, a frustum section and a second cylindrical section, an inner diameter of the first cylindrical section is greater than that of the second cylindrical section, and the housing is integrally structured.

In some implementations, the first cylindrical section comprises a cylinder and the top of the housing, the inlet is provided on a side wall of the cylinder, and the outlet is provided on the top of the housing and located within the central cylinder.

In some implementations, a support surface formed by the support beam is an arch surface facing towards a lower end surface of the central cylinder.

In some implementations, the support beam is of a cross-shaped structure, and ends of the support beam are connected to the side wall of the housing by continuous pouring or masonry.

In some implementations, the support beam is of a grid structure, and ends of the support beam are connected to the side wall of the housing by continuous pouring or masonry. Beneficial effects of the present invention are as follows: the separation chamber, the central cylinder and the support beam of the cyclone separator are manufactured by continuous masonry or pouring in the present invention, which enables a simple process of manufacturing and reduces a cost of manufacturing by more than 70%; the non-metal central cylinder of the present invention is resistant to deformation, wearing and scouring, which enables a long service life; in addition, the central cylinder does not require a replacement after a period of time of service, but only a repair is required before put into service again, which enables a low cost of maintenance and use.

### BRIEF DESCRIPTION OF THE DRAWINGS

Fig. 1 is a schematic main sectional structural diagram of a cyclone separator in a first embodiment in the present invention;
Fig. 2 is a schematic sectional structural diagram along line A-A in Fig. 1;
Fig. 3 is a schematic main sectional structural diagram of a cyclone separator in a second embodiment in the present invention; and
Fig. 4 is a schematic sectional structural diagram along line A-A section in Fig. 3.

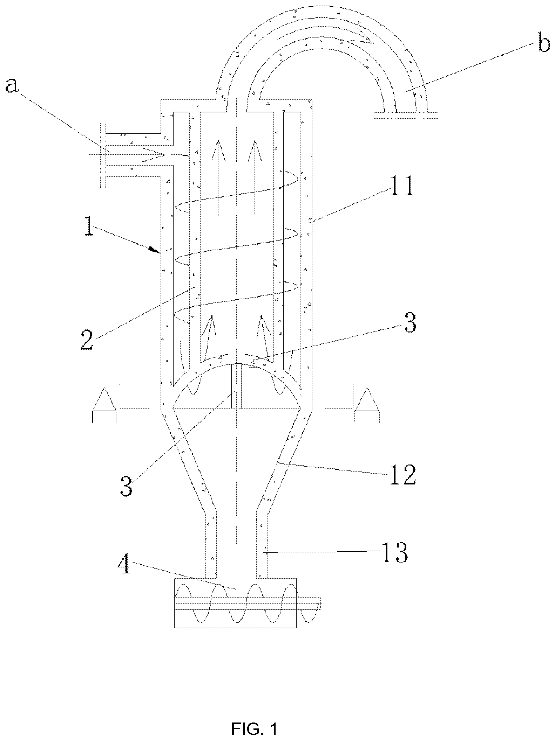

In Figs. 1 to 4: 1 denotes a housing; 11 denotes a first cylindrical section; a denotes an inlet; b denotes an outlet; 12 denotes a frustum section; 13 denotes a second cylindrical section; 2 denotes a central cylinder; 3 denotes a radial support beam; 4 denotes a slag trap.

### DETAILED DESCRIPTION OF THE EMBODIMENTS

The present invention is further illustrated below with reference to the accompanying drawings and two embodiments:

### First Embodiment

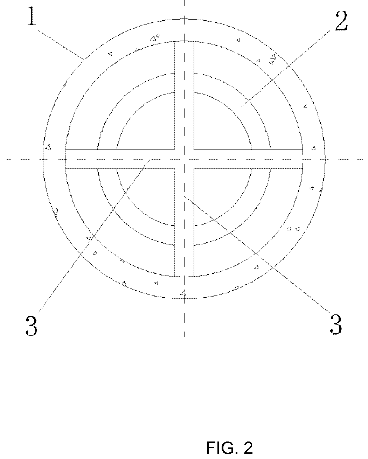

As shown in Figs. 1 and 2, a cyclone separator includes a housing 1 and a central cylinder 2. An inner wall of the housing 1 is made of a non-metal material resistant to high temperature and wearing by pouring or masonry, and a separation chamber is provided within the housing 1 of the cyclone separator. The housing 1 includes a first cylindrical section 11, a frustum section 12 and a second cylindrical section 13. Thereby, a high temperature coal gas is easily formed as a cyclone for separation. An inner diameter of the first cylindrical section 11 is greater than that of the second cylindrical section 13, thereby providing an enough space for the separation of a coal slag-containing high temperature coal gas. The first cylindrical section 11 includes a cylinder and a top of the housing. The housing 1 is integrally structured. The integrally structured housing 1 is firm and durable. The central cylinder 2 is provided within the separation chamber. Specifically, the central cylinder 2 is located in the first cylindrical section 11. The central cylinder 2 is made of a non-metal material resistant to high temperature and wearing by pouring or masonry. The non-metal central cylinder 2 is resistant to thermal deformation, wearing and scouring, which enables a long service life. An inlet a is provided on a side wall of the housing 1, and an outlet b is provided on the top of the housing 1. Specifically, the inlet a is provided on a side wall of the cylinder, and the outlet b is provided on the top of the housing. The outlet is located within the central cylinder 2 and is in communication with the central cylinder 2. The outlet is configured to exhaust the separated high temperature coal gas. The high temperature coal gas is introduced from the inlet a on the side wall of the housing 1 and forms a cyclone in a tangential direction of a cross-sectional circle of the first cylindrical section 11. The separated high temperature coal gas is exhausted from the outlet b via the central cylinder 2, and the separated coal slag falls into a slag trap 4. A radial support beam 3 is provided on the side wall of the housing of the housing 1. The radial support beam 3 is made of a non-mental material resistant to high temperature and wearing by means of continuous pouring or masonry. The radial support beam 3 and the separation chamber are connected by continuous pouring or masonry. The radial support beam 3 is of a cross-shaped structure composed of two support rods. The weight of the central cylinder 2 is uniformly distributed on the radial support beam 3 with the cross-shaped structure. In addition, the cross-shaped structure is a hollowed-out structure, which not only severs as a support, but also enables the separation chamber to be in communication with the slag trap 4. The radial support beam 3 is integrally structured. The integrally structured radial support beam 3 is firm and durable. Four ends of the radial support beam 3 and the side wall of the housing are connected by continuous pouring or masonry. Specifically, the four ends of the radial support beam 3 are located at an end of the first cylindrical section 11. An upper end of the central cylinder 2 and the top of the housing, that is, the top of the housing, are connected by continuous pouring or masonry, and a lower end of the central cylinder 2 and the radial support beam 3 are connected by continuous pouring or masonry. In the present invention, a non-metal material resistant to high temperature and wearing is adopted, and the separation chamber of the cyclone separator, the central cylinder 2 and the radial support beam 3 are formed by continuous pouring or masonry, which enables a simple manufacturing process and reduces a cost of manufacturing. In addition, the central cylinder 2 does not require a replacement after a period of time of service, but only a repair is required before put into service again, which enables a low cost of maintenance and use. In the present invention, the support rods are arched towards the central cylinder 2, such that a support surface formed by the radial support beam 3 composed of the support rods is an arch surface, which has a high support strength and a great bearing capacity. The coal slag-containing high temperature coal gas forms a cyclone for separation. The radial support beam 3 raised towards the central cylinder 2 enables the separated high temperature coal gas to move upwardly along the central cylinder 3 and to be exhausted from the outlet b. The slag trap 4 is provided on the bottom of the separation chamber. The slag trap 4 is in communication with the separation chamber. The slag trap 4 is located below the radial support beam 3. The separated coal slag is trapped in the slag trap 4.

### Second Embodiment

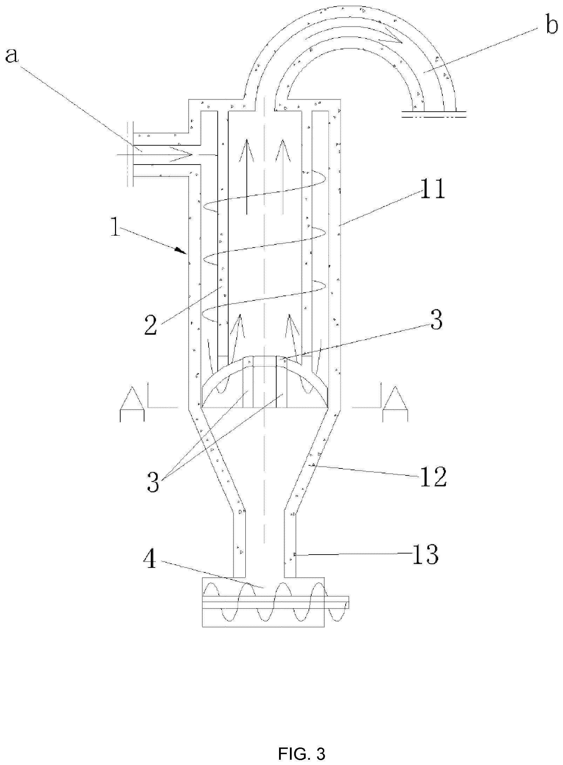

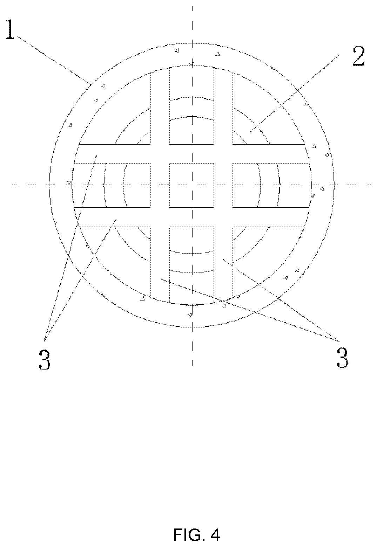

As shown in Figs 3 and 4, on the basis of the first embodiment, the structure of the radial support beam 3 of the cyclone separator is changed from cross-shaped to #-shaped. In the second embodiment, the radial support beam 3 is of a #-shaped structure composed of four support rods. The weight of a central cylinder 2 is uniformly distributed on the radial support beam 3 of the #-shaped structure. In addition, the #-shaped structure is a hollowed-out structure, which enables the separation chamber to be in communication with the slag trap 4. The radial support beam 3 is integrally structured. The integrally structured radial support beam 3 is firm and durable. Eight ends of the radial support beam 3 and the side wall of the housing are connected by continuous pouring or masonry. Specifically, the eight ends of the radial support beam 3 are located at an end of the first cylindrical section 11.

In other embodiments, the number of the support rods may be increased, such that the grid support beam 3 is composed of a plurality of support rods.

## Claims

1. A cyclone separator with a central cylinder made of non-metal refractory material, comprising a housing (1) and a central cylinder (2) located within a separation chamber of the housing, an inlet (a) being provided on a side wall of the housing, an outlet (b) being provided on the top of the housing (1), the central cylinder (2) separating the separation chamber into an outer separation chamber and an inner separation chamber, the inside of the central cylinder being the inner separation chamber, the outside of the central cylinder (2) being the outer separation chamber, the outer separation chamber being in communication with the inlet (a), and the inner separation chamber being in communication with the outlet (b), wherein
the central cylinder (2) is made of non-metal refractory material, such that the central cylinder (2) is not deformed in a high temperature environment and is resistant to wearing; **characterized in that**
a support beam (3) is radially provided on the side wall of the housing, the support beam (3) is a hollowed-out upwardly arched structure, and an arch surface of the support beam (3) is connected to a lower end of the central cylinder (2) for supporting the central cylinder (2); and
an upper end of the central cylinder (2) and the top of the housing are connected by continuous pouring or masonry, the lower end of the central cylinder (2) and the support beam (3) are connected by continuous pouring or masonry, and the side wall of the housing and the support beam (3) are connected by continuous pouring or masonry.

2. The cyclone separator with a central cylinder made of non-metal refractory material of claim 1, wherein a slag trap (4) is provided at the bottom of the separation chamber, and the separation chamber of the housing is in communication with the slag trap (4).

3. The cyclone separator with a central cylinder made of non-metal refractory material of claim 1, wherein the housing comprises a first cylindrical section (11), a frustum section (12) and a second cylindrical section (13), an inner diameter of the first cylindrical section (11) is greater than that of the second cylindrical section (13), and the housing (1) is integrally structured.

4. The cyclone separator with a central cylinder made of non-metal refractory material of claim 3, wherein the first cylindrical section (11) comprises a cylinder and the top of the housing, the inlet (a) is provided on a side wall of the cylinder, and the outlet (b) is provided on the top of the housing and located within the central cylinder (2).

5. The cyclone separator with a central cylinder made of non-metal refractory material of claim 1, wherein a support surface formed by the support beam (3) is an arch surface facing towards a lower end surface of the central cylinder (2).

6. The cyclone separator with a central cylinder made of non-metal refractory material of claim 5, wherein the support beam (3) is of a cross-shaped structure, and ends of the support beam (3) are connected to the side wall of the housing by continuous pouring or masonry.

7. The cyclone separator with a central cylinder made of non-metal refractory material of claim 5, wherein the support beam (3) is of a grid structure, and ends of the support beam (3) are connected to the side wall of the housing by continuous pouring or masonry.

## Patentansprüche

1. Zyklonabscheider mit einem zentralen Zylinder, hergestellt aus nichtmetallischem feuerfestem Material, umfassend ein Gehäuse (1) und einen zentralen Zylinder (2), der innerhalb einer Abscheidekammer des Gehäuses angeordnet ist, wobei ein Einlass (a) an einer Seitenwand des Gehäuses bereitgestellt ist, ein Auslass (b) an der Oberseite des Gehäuses (1) bereitgestellt ist, der zentrale Zylinder (2) die Abscheidekammer in eine äußere Abscheidekammer und eine innere Abscheidekammer trennt, die Innenseite des zentralen Zylinders die innere Abscheidekammer ist, die Außenseite des zentralen Zylinders (2) die äußere Abscheidekammer ist, die äußere Abscheidekammer in Verbindung mit dem Einlass (a) steht und die innere Abscheidekammer in Verbindung mit dem Auslass (b) steht, wobei
der zentrale Zylinder (2) aus nichtmetallischem feuerfestem Material hergestellt ist, sodass der zentrale Zylinder (2) in einer Hochtemperaturumgebung nicht verformt wird und verschleißfest ist; **dadurch gekennzeichnet, dass**
ein Stützträger (3) radial an der Seitenwand des Gehäuses bereitgestellt ist, der Stützträger (3) eine ausgehöhlte, nach oben gebogene Struktur ist und eine Bogenfläche des Stützträgers (3) zum Stützen des zentralen Zylinders (2) mit einem unteren Ende des zentralen Zylinders (2) verbunden ist; und
ein oberes Ende des zentralen Zylinders (2) und die Oberseite des Gehäuses durch kontinuierliches Gießen oder durch Mauerung verbunden werden, das untere Ende des zentralen Zylinders (2) und der Stützträger (3) durch kontinuierliches Gießen oder durch Mauerung verbunden werden und die Seitenwand des Gehäuses und der Stützträger (3) durch kontinuierliches Gießen oder durch Mauerung verbunden werden.

2. Zyklonabscheider mit einem zentralen Zylinder, hergestellt aus nichtmetallischem feuerfestem Material, nach Anspruch 1, wobei ein Schlackenfang (4) am Boden der Abscheidekammer bereitgestellt ist und die Abscheidekammer des Gehäuses in Verbindung mit dem Schlackenfang (4) steht.

3. Zyklonabscheider mit einem zentralen Zylinder, hergestellt aus nichtmetallischem feuerfestem Material, nach Anspruch 1, wobei das Gehäuse einen ersten zylindrischen Abschnitt (11), einen Kegelstumpfabschnitt (12) und einen zweiten zylindrischen Abschnitt (13) umfasst, ein Innendurchmesser des ersten zylindrischen Abschnitts (11) größer als der des zweiten zylindrischen Abschnitts (13) ist, und das Gehäuse (1) einstückig aufgebaut ist.

4. Zyklonabscheider mit einem zentralen Zylinder, hergestellt aus nichtmetallischem feuerfestem Material, nach Anspruch 3, wobei der erste zylindrische Abschnitt (11) einen Zylinder und die Oberseite des Gehäuses umfasst, der Einlass (a) an einer Seitenwand des Zylinders bereitgestellt ist und der Auslass (b) an der Oberseite des Gehäuses bereitgestellt ist und innerhalb des zentralen Zylinders (2) angeordnet ist.

5. Zyklonabscheider mit einem zentralen Zylinder, hergestellt aus nichtmetallischem feuerfestem Material, nach Anspruch 1, wobei eine Stützfläche, die durch den Stützträger (3) gebildet wird, eine Bogenfläche ist, die in Richtung einer unteren Endfläche des zentralen Zylinders (2) weist.

6. Zyklonabscheider mit einem zentralen Zylinder, hergestellt aus nichtmetallischem feuerfestem Material, nach Anspruch 5, wobei der Stützträger (3) eine kreuzförmige Struktur aufweist und Enden des Stützträgers (3) durch kontinuierliches Gießen oder durch Mauerung mit der Seitenwand des Gehäuses verbunden werden.

7. Zyklonabscheider mit einem zentralen Zylinder, hergestellt aus nichtmetallischem feuerfestem Material, nach Anspruch 5, wobei der Stützträger (3) eine Gitterstruktur aufweist und Enden des Stützträgers (3) durch kontinuierliches Gießen oder durch Mauerung mit der Seitenwand des Gehäuses verbunden werden.

## Revendications

1. Séparateur à cyclone avec un cylindre central constitué d'un matériau réfractaire non métallique, comprenant un boîtier (1) et un cylindre central (2) situé dans une chambre de séparation du boîtier, une entrée (a) étant prévue dans une paroi latérale du boîtier, une sortie (b) étant prévue sur le dessus du boîtier (1), le cylindre central (2) séparant la chambre de séparation en une chambre de séparation extérieure et une chambre de séparation intérieure, l'intérieur du cylindre central étant la chambre de séparation intérieure, l'extérieur du cylindre central (2) étant la chambre de séparation extérieure, la chambre de séparation extérieure étant en communication avec l'entrée (a), et la chambre de séparation intérieure étant en communication avec la sortie (b), dans lequel
le cylindre central (2) est constitué d'un matériau réfractaire non métallique, de sorte que le cylindre central (2) n'est pas déformé dans un environnement à haute température et résiste à l'usure ; **caractérisé en ce que**
une barre de support (3) est disposée radialement sur la paroi latérale du boîtier, la barre de support (3) est une structure évidée arquée vers le haut, et une surface arquée de la barre de support (3) est reliée à une extrémité inférieure du cylindre central (2) pour supporter le cylindre central (2) ; et
une extrémité supérieure du cylindre central (2) et le dessus du boîtier sont reliés par un coulage continu ou une maçonnerie, l'extrémité inférieure du cylindre central (2) et la barre de support (3) sont reliées par un coulage continu ou une maçonnerie, et la paroi latérale du boîtier et la barre de support (3) sont reliées par un coulage continu ou une maçonnerie.

2. Séparateur à cyclone avec un cylindre central constitué d'un matériau réfractaire non métallique selon la revendication 1, dans lequel un piège à scories (4) est disposé au fond de la chambre de séparation, et la chambre de séparation du boîtier est en communication avec le piège à scories (4).

3. Séparateur à cyclone avec un cylindre central constitué d'un matériau réfractaire non métallique selon la revendication 1, dans lequel le boîtier comprend une première section cylindrique (11), une section tronconique (12) et une deuxième section cylindrique (13), un diamètre intérieur de la première section cylindrique (11) est supérieur à celui de la deuxième section cylindrique (13), et le boîtier (1) est structuré intégralement.

4. Séparateur à cyclone avec un cylindre central constitué d'un matériau réfractaire non métallique selon la revendication 3, dans lequel la première section cylindrique (11) comprend un cylindre et le dessus du boîtier, l'entrée (a) est disposée dans une paroi latérale du cylindre, et la sortie (b) est disposée sur le dessus du boîtier et se trouve à l'intérieur du cylindre central (2).

5. Séparateur à cyclone avec un cylindre central constitué d'un matériau réfractaire non métallique selon la revendication 1, dans lequel une surface de support formée par la barre de support (3) est une surface arquée tournée vers une surface d'extrémité inférieure du cylindre central (2).

6. Séparateur à cyclone avec un cylindre central constitué d'un matériau réfractaire non métallique selon la revendication 5, dans lequel la barre de support (3) présente une structure en forme de croix, et des extrémités de la barre de support (3) sont reliées à la paroi latérale du boîtier par un coulage continu ou une maçonnerie.

7. Séparateur à cyclone avec un cylindre central constitué d'un matériau réfractaire non métallique selon la revendication 5, dans lequel la barre de support (3) présente une structure de grille, et des extrémités de la barre de support (3) sont reliées à la paroi latérale du boîtier par un coulage continu ou une maçonnerie.
